# EUROPÄISCHE PATENTANMELDUNG

(11) **EP 4 556 342 A1**
(43) Veröffentlichungstag der Anmeldung: **21.05.2025**
(21) Anmeldenummer: 24211305.8
(22) Anmeldetag: 07.11.2024
(51) Int. Cl.: B61B 12/02

(54) **VORRICHTUNG ZUR LAGERUNG EINER ROLLENBATTERIE AN EINER HALTEEINRICHTUNG**

(30) Priorität: 15.11.2023 AT 509262023
(71) Anmelder: Innova Patent GmbH, 6922 Wolfurt (AT)
(72) Erfinder: Saccavini, Stefan, 6850 Dornbirn (AT); Linder, Stefan, 6845 Hohenems (AT)
(74) Vertreter: Patentanwälte Pinter & Weiss OG

(57) **Zusammenfassung**

Um die Wartung und Montage von Rollenbatterien (2), insbesondere der Lagerung, von Seilbahnen zu vereinfachen, den Zeitaufwand zu senken und die Sicherheit zu erhöhen, wird eine Vorrichtung (1) bereitgestellt. Die Vorrichtung (1) dient zur Lagerung einer Rollenbatterie (2) an einer Halteeinrichtung (3), wobei an der Halteeinrichtung (3) zumindest eine Halteausnehmung (4) vorgesehen ist und die Rollenbatterie (2) eine Trägereinheit (5) umfasst, wobei die Trägereinheit (5) einen Lagerteil (6) umfasst und im Lagerteil (6) eine Verbindungsausnehmung (7) vorgesehen ist, wobei ein Verbindungselement (8) durch die Verbindungsausnehmung (7) des Lagerteils (6) der Trägereinheit (5) und durch die zumindest eine Halteausnehmung (4) der Halteeinrichtung (3) gesteckt ist, um die Trägereinheit (5) über das Verbindungselement (8) um eine Drehachse (A) schwenkbar an der Halteeinrichtung (3) zu lagern, dass an der Halteeinrichtung (3) zumindest ein Sicherungselement (9) angeordnet ist, wobei durch die Anordnung eine Relativbewegung zwischen Sicherungselement (9) und Halteeinrichtung (3) radial zur Drehachse (A) unterbunden ist, dass am Sicherungselement (9) eine Sicherungsausnehmung (10) vorgesehen ist und dass der Lagerteil (6) der Trägereinheit (5) zumindest teilweise in der Sicherungsausnehmung (10) des Sicherungselements (9) angeordnet ist.

## Beschreibung

Die gegenständliche Erfindung betrifft eine Vorrichtung zur Lagerung einer Rollenbatterie an einer Halteeinrichtung, wobei an der Halteeinrichtung zumindest eine Halteausnehmung vorgesehen ist und die Rollenbatterie eine Trägereinheit umfasst, wobei die Trägereinheit einen Lagerteil umfasst und im Lagerteil eine Verbindungsausnehmung vorgesehen ist, wobei ein Verbindungselement durch die Verbindungsausnehmung des Lagerteils der Trägereinheit und durch die zumindest eine Halteausnehmung der Halteeinrichtung gesteckt ist, um die Trägereinheit über das Verbindungselement um eine Drehachse schwenkbar an der Halteeinrichtung zu lagern. Die gegenständliche Erfindung betrifft zudem ein Verfahren zur Wartung und Montage einer Lagerung einer Rollenbatterie an einer Halteeinrichtung.

Seilbahnen gibt es in verschiedensten Ausführungsformen, meist zum Personen- und/oder Gütertransport, beispielsweise als städtisches (urbanes) Verkehrsmittel oder für den Personentransport in Skigebieten, wobei an einem Seil hängende Seilbahnfahrzeugen (z.B. mit Kabinen, Sessel oder andere Transportbehälter) für den Transport verwendet werden. In der Regel weisen Seilbahnen zumindest zwei Seilbahnstationen auf, zwischen denen die Seilbahnfahrzeuge mittels zumindest einem Seil über eine oder mehrere Seilbahnstützen bewegt werden.

Der Aufbau einer Seilbahnstütze besteht grundsätzlich aus einem Fundament, der Stütze selbst und einem Querträger, auch als Querhaupt oder Joch bezeichnet, am oberen Ende der Stütze. Dabei können Seilbahnstützen als Stahlfachwerkkonstruktion oder als Stahlrohr- bzw. Blechkastenkonstruktion ausgeführt sein. An einer Seilbahnstütze bzw. am Querträger sind üblicherweise mehrere Rollen angeordnet, beispielsweise in Form einer sogenannten Rollenbatterie, um das Seil mit den Seilbahnfahrzeugen zu tragen und zu führen. Zur Lagerung der Rollenbatterien am Querträger werden üblicherweise Verbindungselemente wie Bolzen verwendet. Bei einer Mehrzahl an Rollenbatterien können diese auch an einen zusätzlichen Träger montiert sein, welcher in weiterer Folge am Querträger mittels Bolzen gelagert ist.

Bei Seilbahnen müssen periodisch nach 15 Jahren (30.000 Betriebsstunden) und nachfolgend alle 10 Jahre (20.000 Betriebsstunden) die Bolzen einer Rissprüfung unterzogen werden. Dies ist mit beachtlichem Aufwand verbunden. Insbesondere bei urbanen Seilbahnen sind auf Grund der sehr hohen Betriebsstunden pro Jahr diese Rissprüfungen bereits nach wenigen Jahren (ca. 5 Jahre) durchzuführen. Gleichzeitig besteht das Problem, dass bei urbanen Seilbahnen wegen der erforderlichen Verfügbarkeit nur wenig Zeit für Wartungsarbeiten zur Verfügung steht.

Zur Wartung der Lagerung einer Rollenbatterie an einer Seilbahnstütze muss das Seil abgehoben und die Rollenbatterie abgehangen werden, um die Lagerung zu Warten, Bolzen oder Buchsen zu tauschen und die Lagerung einer genauen Kontrolle unterziehen zu können. Für den Tausch eines Bolzens müssen die vom Bolzen gehaltenen Teile, nachdem der Bolzen gezogen wurde, von der Seilbahnstütze herabgelassen werden und für die Wiedermontage erneut hinaufgezogen werden. Beispielsweise wird in CH 713 297 A2 oder in WO 2016/058014 A1 ein Anheben des Seils von der Rollenbatterie zur Wartung dieser offenbart. In AT 249741 B wird eine Vorrichtung beschrieben, um die Demontage des Bolzens zu erleichtern.

Im Stand der Technik sind Vorrichtungen und Verfahren offenbart, mit denen die Wartung von Rollenbatterien beschrieben wird. In US 2016/0152244 A1 oder EP 2 301 819 A2 werden beispielswese Tausch- bzw. Servicefahrzeug, welche ähnlich wie ein Seilbahnfahrzeug aufgebaut sind, verwendet, um eine Rollenbatterie von einer Seilbahnstütze abzusenken und zur Wiedermontage an der Seilbahnstütze aufzuheben. Dieses Auf- und Absenken der Rollenbatterie ist zeit- und kostenintensiv.

Es ist daher eine Aufgabe der gegenständlichen Erfindung die Wartung und Montage von Rollenbatterien, insbesondere der Lagerung, von Seilbahnen zu vereinfachen, den Zeitaufwand zu senken und die Sicherheit zu erhöhen.

Erfindungsgemäß wird die Aufgabe mit einer Vorrichtung zur Lagerung einer Rollenbatterie an einer Halteeinrichtung gelöst, wobei an der Halteeinrichtung zumindest ein Sicherungselement angeordnet ist, wobei durch die Anordnung eine Relativbewegung zwischen Sicherungselement und Halteeinrichtung radial zur Drehachse unterbunden ist, dass am Sicherungselement eine Sicherungsausnehmung vorgesehen ist und dass der Lagerteil der Trägereinheit zumindest teilweise in der Sicherungsausnehmung des Sicherungselement angeordnet ist. Durch das Sicherungselement kann einfach sichergestellt werden, dass bei Entfernen des Verbindungselements aus der Lagerung oder Einstecken des Verbindungselements in die Lagerung, die Trägereinheit an der Halteeinrichtung gelagert bleibt. Dadurch entfällt beispielsweise bei einer Wartung der Lagerung das Herablassen und erneute Hinaufziehen der Rollenbatterie von der Seilbahnstütze, wodurch sich einerseits die Sicherheit für das Seilbahnpersonal erhöht und andererseits die Wartung weniger Zeit in Anspruch nimmt. Das Sicherungselement ist besonders vorteilhaft, da es auch bei bestehenden Seilbahnen nachgerüstet werden kann.

In einer bevorzugten Ausführungsform besteht in der Anordnung zwischen der Sicherungsausnehmung des Sicherungselements und dem Lagerteil der Trägereinheit ein Spalt, wobei das Sicherungselement zumindest ein Einstellelement umfasst, welches bei entferntem Verbindungselement radial zur Drehachse bewegbar ist, um den Lagerteil der Trägereinheit koaxial zur Drehachse anzuordnen. Dadurch ist es einfacher das Verbindungselement bei der Montage der Lagerung einzusetzen. Durch den Spalt wird bei eingestecktem Verbindungselement zudem der Verschleiß des Sicherungselements und/oder des Lagerteils bei häufigem Schwenken der Rollenbatterie reduziert.

Vorzugsweise ist das Sicherungselement fest mit der Halteeinrichtung verbunden. Alternativ ist das Sicherungselement fest mit dem Lagerteil der Trägereinheit verbunden und das Sicherungselement ist um die Drehachse schwenkbar an der Halteeinrichtung angeordnet. In beiden Ausführungsvarianten können Kräfte und Momente, welche bei entferntem Verbindungselement auftreten, einfach an die Halteeinrichtung abgeleitet werden.

In einer bevorzugten Ausführungsform weist die Halteeinrichtung zwei Wangen auf in denen jeweils eine Halteausnehmung vorgesehen ist und zwischen den Wangen ein Aufnahmebereich für den Lagerteil der Trägereinheit ausgebildet ist, wobei an jeder Wange ein Sicherungselement mit einer Sicherungsausnehmung angeordnet ist, wobei durch die Anordnung eine Relativbewegung zwischen dem jeweiligen Sicherungselement und der Wange der Halteeinrichtung radial zur Drehachse unterbunden ist und wobei je ein axiales Ende des Lagerteils der Trägereinheit zumindest teilweise in der Sicherungsausnehmung eines der Sicherungselemente angeordnet ist. Im Vergleich zu einer einseitigen Anordnung des Sicherungselements, können mit der beidseitigen Anordnung Kräfte und Momente, welche bei entferntem Verbindungselement und durch die Anordnung des Lagerteils der Trägereinheit in der Sicherungsausnehmung des jeweiligen Sicherungselement auftreten, auf die beiden Wangen der Halteeinrichtung aufgeteilt und abgeleitet werden.

In einem vorteilhaften Verfahren wird das Verbindungselement aus der Verbindungsausnehmung des Lagerteils der Trägereinheit und aus der zumindest eine Halteausnehmung der Halteeinrichtung entfernt, wodurch die Trägereinheit durch die Anordnung des Lagerteils der Trägereinheit in der Sicherungsausnehmung des Sicherungselements, um die Drehachse schwenkbar an der Halteeinrichtung gelagert bleibt, und dass beim Wiedereinstecken des zuvor entfernten Verbindungselements oder beim Einstecken eines anderen Verbindungselements durch die Verbindungsausnehmung des Lagerteils der Trägereinheit und durch die zumindest eine Halteausnehmung der Halteeinrichtung, die Trägereinheit über das Verbindungselement um die Drehachse schwenkbar an der Halteeinrichtung gelagert wird. Durch das Sicherungselement kann bei Entfernen des Verbindungselements aus der Lagerung oder Einstecken des Verbindungselements in die Lagerung, die Trägereinheit an der Halteeinrichtung gelagert bleiben. Dadurch entfällt in einfacher Weise, z.B. bei einer Wartung der Lagerung, das Herablassen und erneute Hinaufziehen der Rollenbatterie von der Seilbahnstütze, wodurch sich einerseits die Sicherheit für das Seilbahnpersonal erhöht und andererseits die Wartung weniger Zeit in Anspruch nimmt.

Vorzugsweise besteht in der Anordnung zwischen der Sicherungsausnehmung des Sicherungselements und dem Lagerteil der Trägereinheit ein Spalt und das Einstellelement des Sicherungselements wird vor dem Hineinstecken des Verbindungselements in die Verbindungsausnehmung radial zur Drehachse bewegt, um den Lagerteil der Trägereinheit koaxial zur Drehachse anzuordnen. Dadurch ist es insbesondere einfacher das Verbindungselement bei der Montage der Lagerung einzusetzen.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig. 1 den grundlegenden Aufbau einer Rollenbatterie und einer Haltereinrichtung,
Fig. 2 eine Schnittansicht der erfindungsgemäßen Vorrichtung zur Lagerung der Rollenbatterie an der Haltereinrichtung,
Fig. 3 eine Seitenansicht eines Sicherungselements der erfindungsgemäßen Vorrichtung,
Fig. 4 eine weitere Ausführungsform einer Lagerung einer Rollenbatterie an einer Halteeinrichtung,
Fig. 5 ein beispielhaftes Verfahren zur Wartung und Montage der Lagerung.

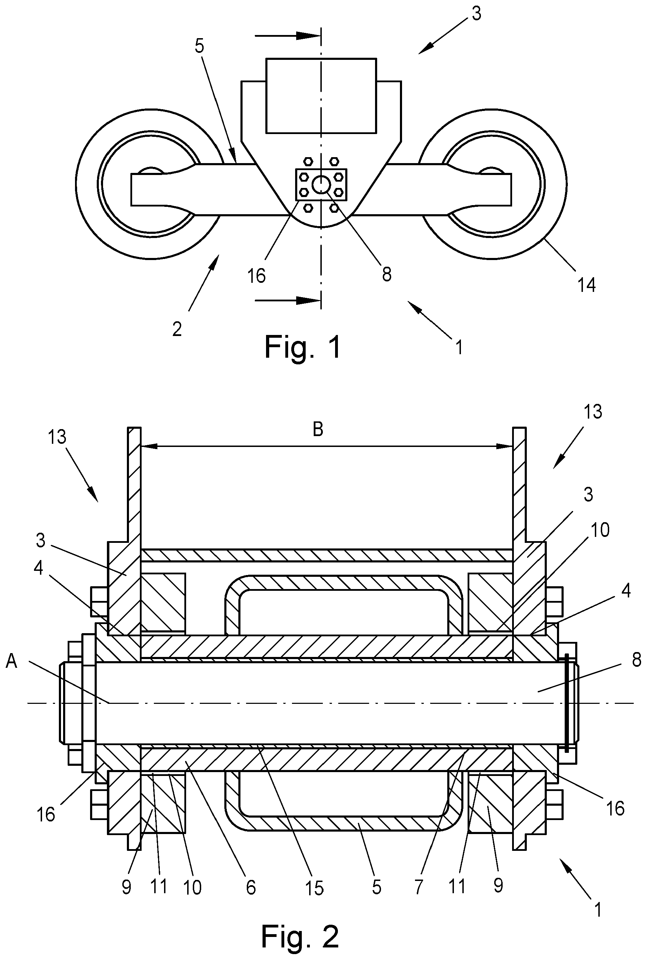

In Fig. 1 ist der grundlegende Aufbau einer Rollenbatterie 2 und einer Halteeinrichtung 3 dargestellt. Die Halteeinrichtung 3 kann dabei als eine Seilbahnstütze (nicht dargestellt) ausgeführt sein oder auch ein Teil der Seilbahnstütze sein, z.B. ein Querträger. Die Halteeinrichtung 3 kann beispielsweise mit einer Schraubverbindung an der Seilbahnstütze befestigt sein. Die Rollenbatterie 2 umfasst eine Trägereinheit 5. Die Trägereinheit 5 ist in Fig. 2 als ein Formrohr ausgeführt, wobei natürlich unterschiedliche Ausführungsformen und unterschiedliche Querschnitte denkbar sind. An der Trägereinheit 5 ist eine Anzahl an Rollen 14 vorgesehen, welche an der Trägereinheit 5 gelagert sind. Die Trägereinheit 5 kann relativ zur Halteeinrichtung 3 um eine Drehachse verschwenkbar sein.

Die Rollenbatterie 2 ist an der Halteeinrichtung 3 mit der erfindungsgemäßen Vorrichtung 1 gelagert. In Fig. 2 ist eine Schnittansicht der Vorrichtung 1 dargestellt. An der Halteeinrichtung 3 ist zumindest eine Halteausnehmung 4 (z.B. eine Bohrung) vorgesehen. Die Trägereinheit 5 umfasst einen Lagerteil 6, wobei im Lagerteil 6 eine Verbindungsausnehmung 7 vorgesehen ist. Wie in Fig. 2 dargestellt, kann der Lagerteil 6 z.B. als ein Hohlzylinder ausgeführt sein, welcher sich durch den Querschnitt der Trägereinheit 5 erstreckt.

Weiters ist ein Verbindungselement 8 durch die Verbindungsausnehmung 7 des Lagerteils 6 der Trägereinheit 5 und durch die zumindest eine Halteausnehmung 4 der Halteeinrichtung 3 gesteckt. Damit ist die Trägereinheit 5 über das Verbindungselement 8 um eine Drehachse A schwenkbar an der Halteeinrichtung 3 gelagert. Das Verbindungselement 8 kann dabei z.B. als ein Bolzen ausgeführt sein. Das Verbindungselement 8 kann auch noch ein Lagerelement 15 umfassen, welches zwischen einer Umfangsfläche des Verbindungselements 8 und der Verbindungsausnehmung 7 des Lagerteils 6 angeordnet ist. Das Lagerelement 15 kann als ein Hohlzylinder (z.B. eine Buchse, Gleitlagerbuchse) ausgeführt sein.

Das Verbindungselement 8 kann weiters beispielsweise an der Umfangsfläche zumindest eine Umlaufnut aufweisen, wobei in der Umlaufnut ein Sicherungsring vorgesehen ist, welcher dazu dient das Verbindungselement 8 in Richtung der Drehachse A zu fixieren.

An der Halteeinrichtung 3 ist zumindest ein Sicherungselement 9 angeordnet, wobei durch die Anordnung eine Relativbewegung zwischen Sicherungselement 9 und Halteeinrichtung 3 radial zur Drehachse A, insbesondere in Richtung einer auf die Trägereinheit 5 wirkende Schwerkraft, unterbunden ist. In der Ausführungsform in Fig. 2 sind zwei Sicherungselemente 9 dargestellt. Am Sicherungselement 9 ist eine Sicherungsausnehmung 10 vorgesehen. Der Form der Sicherungsausnehmung 10 stimmt vorzugsweise mit dem Querschnitt des Lagerteils 6 überein. Der Lagerteil 6 der Trägereinheit 5 ist zumindest teilweise in der Sicherungsausnehmung 10 des Sicherungselements 9 angeordnet.

Das Sicherungselement 9 ist vorzugsweise fest mit der Halteeinrichtung 3 (z.B. mit Schrauben) verbunden. Alternativ kann das Sicherungselement 9 auch fest mit dem Lagerteil 6 der Trägereinheit 5 verbunden sein (z.B. angeschweißt). Die Rollenbatterie 2 ist durch die Lagerung an der Halteeinrichtung 3 um die Drehachse A schwenkbar angeordnet. Daher ist das Sicherungselement 9 um die Drehachse A ebenfalls schwenkbar an der Halteeinrichtung 3 angeordnet. Damit das Sicherungselement 9 einerseits schwenkbar ist und andererseits an der Haltereinrichtung 3 radial zur Drehachse A befestigt ist, kann beispielsweise eine bogenförmige Nut (nicht dargestellt) in der Haltereinrichtung 3 vorgesehen sein, durch die Schrauben durchgeführt sind. Das Sicherungselement 9 ist mit den Schrauben an der Haltereinrichtung 3 befestigt und die Schrauben können sich in der bogenförmigen Nut bewegen, wodurch das Sicherungselement 9 schwenkbar ist.

In Fig. 2 ist eine bevorzugte Ausführungsform der Halteeinrichtung 3 dargestellt. Dabei weist die Halteeinrichtung 3 zwei Wangen 13 auf. In den Wangen 13 ist jeweils eine Halteausnehmung 4 vorgesehen und zwischen den Wangen 13 ist ein Aufnahmebereich B für den Lagerteil 6 der Trägereinheit 5 ausgebildet. An jeder Wange 13 ist ein Sicherungselement 9 mit einer Sicherungsausnehmung 10 angeordnet. Durch die Anordnung ist eine Relativbewegung zwischen dem jeweiligen Sicherungselement 9 und der Wange 13 der Halteeinrichtung 3 radial zur Drehachse A unterbunden. Dabei ist je ein axiales Ende des Lagerteils 6 der Trägereinheit 5 zumindest teilweise in der Sicherungsausnehmung 10 eines der Sicherungselemente 9 angeordnet.

Weiters kann die Vorrichtung 1 zumindest einen Lagerdeckel 16 umfassen, welcher an der Halteeinrichtung befestigt ist. In der Ausführungsform der Vorrichtung 1 in Fig. 2 sind zwei Lagerdeckel 16 dargestellt.

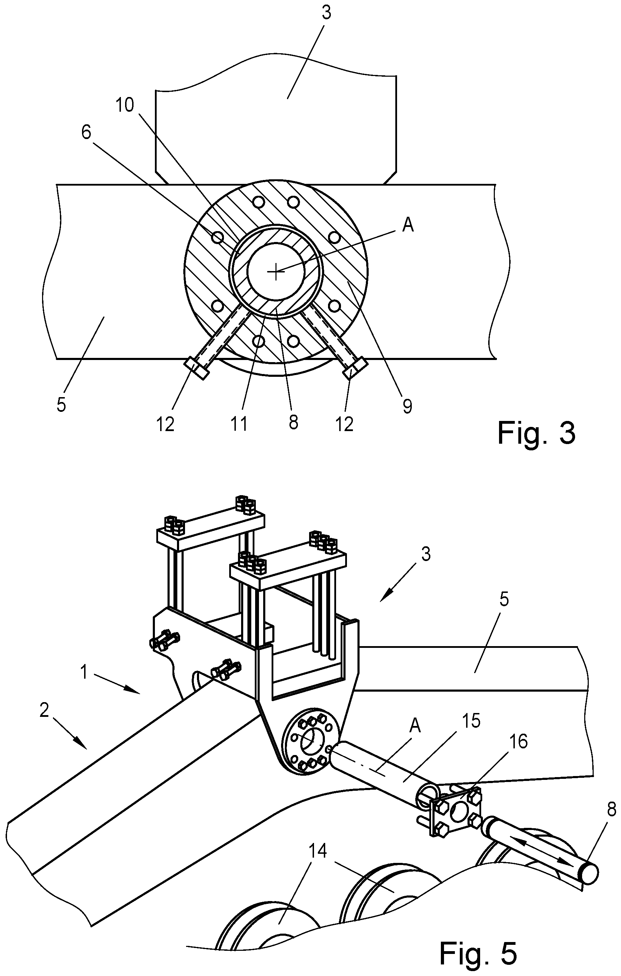

In Fig. 3 ist eine Seitenansicht des Sicherungselements 9 der Vorrichtung 1 dargestellt. Das Sicherungselement 9 ist dabei ringförmig dargestellt. Natürlich kann das Sicherungselement 9 mit anderen Querschnitten ausgeführt sein. In der Anordnung zwischen der Sicherungsausnehmung 10 des Sicherungselements 9 und dem Lagerteil 6 der Trägereinheit 5 besteht ein Spalt 11 (welcher auch in Fig. 2 dargestellt ist). Das Sicherungselement 9 umfasst vorzugsweise zumindest ein Einstellelement 12, welches bei entferntem Verbindungselement 8 radial zur Drehachse A bewegbar ist, um den Lagerteil 6 der Trägereinheit 5 koaxial zur Drehachse A anzuordnen. In Fig. 3 sind zwei Einstellelemente 12 dargestellt, wobei diese beispielsweise als Schrauben ausgeführt sind. Durch Einschrauben der Schrauben in das Sicherungselement 9 treten diese in Kontakt mit dem Lagerteil 6, wodurch der Lagerteil 6 in Richtung Drehachse A bewegen wird.

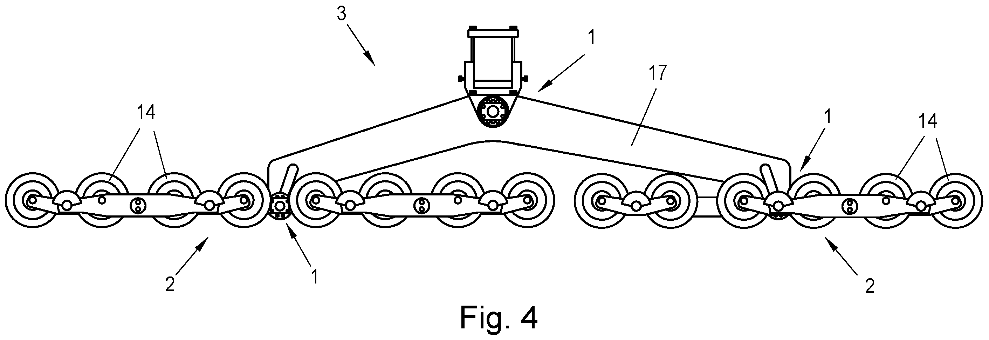

In Fig. 4 ist eine weitere Ausführungsform einer Lagerung einer Rollenbatterie 2 an einer Halteeinrichtung 3 dargestellt. Dabei umfasst die Halteeinrichtung 3 ein zusätzlicher Träger 17, an welchem jeweils eine Rollenbatterie 2 mit einer Vorrichtung 1 gelagert ist. Die Rollenbatterien 2 sind wiederum über den Träger 17 mit einer weiteren Vorrichtung 1 an der Halteeinrichtung 3 gelagert.

In Fig. 5 ist ein beispielhaftes Verfahren zur Wartung und Montage der Lagerung der Rollenbatterie 2 an einer Halteeinrichtung 3 mit der Vorrichtung 1 dargestellt. Dabei wird das Verbindungselement 8 aus der Verbindungsausnehmung 7 des Lagerteils 6 der Trägereinheit 5 und aus der zumindest eine Halteausnehmung 4 der Halteeinrichtung 3 entfernt (mit Pfeil angedeutet). Dabei wird auch, falls vorhanden, der Lagerdeckel 16 und das Lagerelement 15 entfernt. Dadurch kann die Lagerung inspiziert werden, z.B. der Verschleiß des Verbindungselements 8 oder des Lagerelements 15.

Dabei bleibt die Trägereinheit 5 bei entfernten Verbindungselement 8 durch die Anordnung des Lagerteils 6 der Trägereinheit 5 in der Sicherungsausnehmung 10 des Sicherungselements 9, um die Drehachse A schwenkbar an der Halteeinrichtung 3 gelagert. Beim Wiedereinstecken des zuvor entfernten Verbindungselements 8 oder beim Einstecken eines anderen Verbindungselements 8 (z.B. bei Bruch des Verbindungselements 8) durch die Verbindungsausnehmung 7 des Lagerteils 6 der Trägereinheit 5 und durch die zumindest eine Halteausnehmung 4 der Halteeinrichtung 3 wird die Trägereinheit 5 über das Verbindungselement 8 um die Drehachse A schwenkbar an der Halteeinrichtung 3 gelagert.

Zum Wiedereinstecken des entfernten Verbindungselements 8 oder beim Einstecken eines anderen Verbindungselements 8 wird vorzugsweise der Lagerteil 6 mit dem Einstellelement 12 des Sicherungselements 9 radial zur Drehachse A bewegt, um den Lagerteil 6 der Trägereinheit 5 koaxial zur Drehachse A anzuordnen. Dazu können die Schrauben als Einstellelemente 12 in das Sicherungselement 9 geschraubt werden, wodurch diese in Kontakt mit dem Lagerteil 6 treten und den Lagerteil 6 in Richtung Drehachse A bewegen.

Der Begriff "Wartung" beschreibt in diesem Zusammenhang verschiedene Tätigkeiten, welche vom Seilbahnpersonal durchgeführt werden können, wenn das Verbindungselement 8 aus der Lagerung entfernt wird. Dabei kann beispielsweise die Lagerung der Rollenbatterie 2 an der Halteeinrichtung 3 durch das Seilbahnpersonal inspizieren werden, das Verbindungselement 8 kann auf Risse überprüft werden, bei Verschleiß des Verbindungselements 8 und/oder des Lagerelements 15 können diese getauscht werden, usw. Durch die erfindungsgemäße Vorrichtung 1 kann sichergestellt werden, dass dabei die Rollenbatterie 2 an der Halteeinrichtung 3 gelagert bleibt.

Der Begriff "Montage" beschreibt in diesem Zusammenhang auch die Erstmontage der Vorrichtung 1, mit welcher die Vorrichtung 1 durch Einsetzen des Verbindungselements 8 hergestellt wird.

## Patentansprüche

1. Vorrichtung (1) zur Lagerung einer Rollenbatterie (2) an einer Halteeinrichtung (3), wobei an der Halteeinrichtung (3) zumindest eine Halteausnehmung (4) vorgesehen ist und die Rollenbatterie (2) eine Trägereinheit (5) umfasst, wobei die Trägereinheit (5) einen Lagerteil (6) umfasst und im Lagerteil (6) eine Verbindungsausnehmung (7) vorgesehen ist, wobei ein Verbindungselement (8) durch die Verbindungsausnehmung (7) des Lagerteils (6) der Trägereinheit (5) und durch die zumindest eine Halteausnehmung (4) der Halteeinrichtung (3) gesteckt ist, um die Trägereinheit (5) über das Verbindungselement (8) um eine Drehachse (A) schwenkbar an der Halteeinrichtung (3) zu lagern, **dadurch gekennzeichnet, dass** an der Halteeinrichtung (3) zumindest ein Sicherungselement (9) angeordnet ist, wobei durch die Anordnung eine Relativbewegung zwischen Sicherungselement (9) und Halteeinrichtung (3) radial zur Drehachse (A) unterbunden ist, **dass** am Sicherungselement (9) eine Sicherungsausnehmung (10) vorgesehen ist **und dass** der Lagerteil (6) der Trägereinheit (5) zumindest teilweise in der Sicherungsausnehmung (10) des Sicherungselements (9) angeordnet ist.

2. Vorrichtung (1) nach Anspruch 1, **dadurch gekennzeichnet, dass** in der Anordnung zwischen der Sicherungsausnehmung (10) des Sicherungselements (9) und dem Lagerteil (6) der Trägereinheit (5) ein Spalt (11) besteht, wobei das Sicherungselement (9) zumindest ein Einstellelement (12) umfasst, welches bei entferntem Verbindungselement (8) radial zur Drehachse (A) bewegbar ist, um den Lagerteil (6) der Trägereinheit (5) koaxial zur Drehachse (A) anzuordnen.

3. Vorrichtung (1) nach Anspruch 1 oder 2, **dadurch gekennzeichnet, dass** das Sicherungselement (9) fest mit der Halteeinrichtung (3) verbunden ist.

4. Vorrichtung nach Anspruch 1 oder 2, **dadurch gekennzeichnet, dass** das Sicherungselement (9) fest mit dem Lagerteil (6) der Trägereinheit (5) verbunden ist und das Sicherungselement (9) um die Drehachse (A) schwenkbar an der Halteeinrichtung (3) angeordnet ist.

5. Vorrichtung (1) nach einem der Ansprüche 1 bis 4, **dadurch gekennzeichnet, dass** die Halteeinrichtung (3) zwei Wangen (13) aufweist in denen jeweils eine Halteausnehmung (4) vorgesehen ist und zwischen den Wangen (13) ein Aufnahmebereich (B) für den Lagerteil (6) der Trägereinheit (5) ausgebildet ist, wobei an jeder Wange (13) ein Sicherungselement (9) mit einer Sicherungsausnehmung (10) angeordnet ist, wobei durch die Anordnung eine Relativbewegung zwischen dem jeweiligen Sicherungselement (9) und der Wange (13) der Halteeinrichtung (3) radial zur Drehachse (A) unterbunden ist und wobei je ein axiales Ende des Lagerteils (6) der Trägereinheit (5) zumindest teilweise in der Sicherungsausnehmung (10) eines der Sicherungselemente (9) angeordnet ist.

6. Verfahren zur Wartung und Montage einer Lagerung einer Rollenbatterie (2) an einer Halteeinrichtung (3) mit einer Vorrichtung (1) nach einem der Ansprüche 1 bis 5, **dadurch gekennzeichnet, dass** das Verbindungselement (8) aus der Verbindungsausnehmung (7) des Lagerteils (6) der Trägereinheit (5) und aus der zumindest eine Halteausnehmung (4) der Halteeinrichtung (3) entfernt wird, wodurch die Trägereinheit (5) durch die Anordnung des Lagerteils (6) der Trägereinheit (5) in der Sicherungsausnehmung (10) des Sicherungselements (9) an der Halteeinrichtung (3) gelagert bleibt, **und dass** beim Wiedereinstecken des zuvor entfernten Verbindungselements (8) oder beim Einstecken eines anderen Verbindungselements (8) durch die Verbindungsausnehmung (7) des Lagerteils (6) der Trägereinheit (5) und durch die zumindest eine Halteausnehmung (4) der Halteeinrichtung (3), die Trägereinheit (5) über das Verbindungselement (8) um die Drehachse (A) schwenkbar an der Halteeinrichtung (3) gelagert wird.

7. Verfahren nach Anspruch 6, **dadurch gekennzeichnet, dass** in der Anordnung zwischen der Sicherungsausnehmung (10) des Sicherungselements (9) und dem Lagerteil (6) der Trägereinheit (5) ein Spalt (11) besteht und das Einstellelement (12) des Sicherungselements (9) vor dem Hineinstecken des Verbindungselements (8) in die Verbindungsausnehmung (7) radial zur Drehachse (A) bewegt wird, um den Lagerteil (6) der Trägereinheit (5) koaxial zur Drehachse (A) anzuordnen.
